# EUROPEAN PATENT APPLICATION

(11) **EP 2 160 005 A1**
(43) Date of publication of application: **03.03.2010**
(21) Application number: 08252837.3
(22) Date of filing: 28.08.2008
(51) Int. Cl.: H04M 3/56, H04S 1/00

(54) **Decentralised spatialized audio processing**

(71) Applicant: BRITISH TELECOMMUNICATIONS public limited company, London EC1A 7AJ (GB)
(72) Inventor: The designation of the inventor has not yet been filed
(74) Representative: Lau, Chi-Fai

(57) **Abstract**

There is proposed a method of spatialized audio conferencing allowing a spatially fixed auditory display to be implemented. Each device involved in the conference filters its own audio source to generate a spatialized audio source at a predetermined location in a shared auditory display. The filtered audio is then sent to the other devices, which perform local mixing of all the audio sources to generate a complete shared auditory display. Alternatively, the mixing can be done at a separate central server and then sent to the participant devices. As each device only needs to perform the complex spatialized processing for its own audio source, low power devices may be supported such as PDAs and smart phones.

## Description

### Field of the Invention

This invention relates to a method of spatialized audio conferencing, in particular, a method that allows a spatially fixed auditory display to be provided for the audio conference to a number of low-powered devices.

### Background to the Invention

Traditional monophonic audio conferences typically present the user with an auditory speech display devoid of spatial cues. Monaural audio from each participant is mixed and presented to the user, who hears a monophonic auditory speech display. Such conferences may be extended to include spatial cues, using spatial reproduction techniques such as head related transfer function (HRTF) filtering. Using this particular method, each audio source within the auditory display may be filtered with a different binaural HRTF, relating to a particular spatial location within the auditory speech display. The HRTF filtering process imposes spatial cues upon each source, and hence each user is presented with a spatially enhanced auditory speech display, in which each source is perceived by the listener as emanating from a specific spatial location. A spatially enhanced display is known to be advantageous in audio conferencing applications, even those using simple spatial audio reproduction techniques.

In an audio conferencing environment with many participants and thus multiple audio sources, local spatialization of all the audio at each local device would require considerable processing resources. Existing models exist to overcome this problem.

One solution is to utilise a centralized processing model, where each device sends their audio data to a central server/conference bridge, which then performs the spatial processing on behalf of all the devices. However, this places a high processing demand on the central server, especially if custom spatial processing is provided to each device i.e. each device is able to individually customise the auditory display. For a conference of N users containing devices with reduced processing power, a maximum of 2N(N-1) filter operations are required by the processing bridge to ensure a custom display for all devices. This is derived from each user requiring a display of N-1 sources (omitting their own), and each source in the display needs two filter ops (left and right ear).

US patent 7,012,630 describes an example of a conference bridge that performs centralized spatial processing. Using this system, unprocessed audio from each participant device is sent to a central point, to be spatially processed and mixed before being returned to the appropriate devices.

An alternative solution is for the centralised processor to generate what is referred to as a shared auditory display, so that each device is presented with an auditory display in which each audio source is located at a different, but spatially fixed location. However, this still places a lot of stress on the central server taking up costly resources.

### Summary of the Invention

It is the aim of embodiments of the present invention to address one or more of the above-stated problems, thereby providing an improved method of operating an audio conferencing device.

According to one aspect of the present invention, there is provided a method of operating an audio conferencing device for a spatialized audio conferencing system, wherein said method comprises the steps of:
locally filtering a single audio source input to said device to generate a corresponding spatially filtered audio stream;
providing the spatially filtered audio stream to a mixing module corresponding to the device;
receiving a mixed spatially filtered audio stream from the mixing module, said mixed spatially filtered audio stream comprising a plurality of spatially filtered audio streams associated with said audio conferencing device and at least one other audio conferencing device;
outputting the mixed spatially filtered audio stream from the device to an audio output means.

Preferably, the filtering is to predetermined spatial locations in a fixed auditory display. The filtering can comprise applying of a head related transfer function to the input audio source.

The predetermined spatial locations can be determined by a controlling module, and said controlling module is located in a separate server and connected to the audio conferencing device over a network. Alternatively, the predetermined spatial locations can be determined by a controlling module, and said controlling module is located in one of a plurality of audio conferencing devices in the audio conferencing system.

The mixing module can be located within the audio conferencing device, or the mixing module can be located in a separate mixing server connected to the audio conferencing device over a network.

Preferably, each audio stream has an associated level and the level is controlled at the mixing module by the audio device.

Embodiments of the invention allow a spatially fixed auditory display to be implemented without the requirement for complex centralized processing. As each device only needs to perform the complex spatialized processing for its own audio source, low power devices may be supported such as PDAs and smart phones. The single spatially processed audio source from each device may then be sent to a centralized mixing server for combination and retransmission to each device in the conference, or can otherwise be mixed locally at each device if each device share their filtered audio with each other.

Spatially fixing the auditory display means that for a conference of N users, only N filter operations are required (one per device). Contrast this to custom audio displays for N users, where the a maximum of 2N(N-1) filter operations are required.

An audio conferencing device for a spatialized audio conferencing system, said audio conferencing device comprising:
a spatial filter adapted to locally filter a single audio source input to said device to generate a corresponding spatially filtered audio stream, and to provide the spatially filtered audio stream to a mixing module corresponding to the audio conferencing device;
an output module adapted to receive a mixed spatially filtered audio stream from the mixing module, wherein said mixed spatially filtered audio stream comprises a plurality of spatially filtered audio streams associated with said audio conferencing device and at least one other audio conferencing device, and to output the mixed spatially filtered audio stream from the device to an audio output means.

A system for spatialized audio conferencing, said system comprising a plurality of audio conferencing devices and a corresponding plurality of mixing modules, wherein:
each of said plurality of devices comprises a filtering module adapted to filter an audio source associated with the respective device to generate a corresponding spatially filtered audio stream, and each of said plurality of devices is adapted to provide the corresponding spatially filtered audio stream to the corresponding mixing module;
each mixing module is adapted to mix each of the plurality of spatially filtered audio streams provided to generate a mixed filtered audio stream, and to provide said mixed filtered audio stream to the audio conferencing device corresponding to the mixing module; and
wherein each of the plurality of devices comprises a processing module for processing the received mixed filtered audio stream into an audio output representing a spatially fixed auditory display.

### Brief Description of the Drawings

For a better understanding of the present invention reference will now be made by way of example only to the accompanying drawings, in which:
Figure 1 illustrates the arrangement of devices and supporting servers in a spatialized audio conferencing system in an example of the present invention;
Figure 2 illustrates a user device processing module for filtering audio input from a user and processing mixed spatialized audio streams for output in an example of the present invention;
Figure 3 illustrates a mixing module for mixing a plurality of spatialized audio streams in an example of the present invention;
Figure 4 illustrates a spatial filtering processor in an example of the present invention;
Figure 5 illustrates a mixing block in a mixing server with a series of mixing modules in an example of the present invention.

### Description of Preferred Embodiments

The present invention is described herein with reference to particular examples. The invention is not, however, limited to such examples.

In examples of the present invention, there is proposed a method of spatialized audio conferencing that allows a spatially fixed auditory display to be implemented. Each device involved in the conference filters its own audio source to generate a spatialized audio source at a predetermined location in a shared auditory display. The filtered audio is then sent to the other devices, which perform local mixing of all the audio sources to generate a complete shared auditory display. Alternatively, the mixing can be done at a separate central server and then sent to the participant devices.

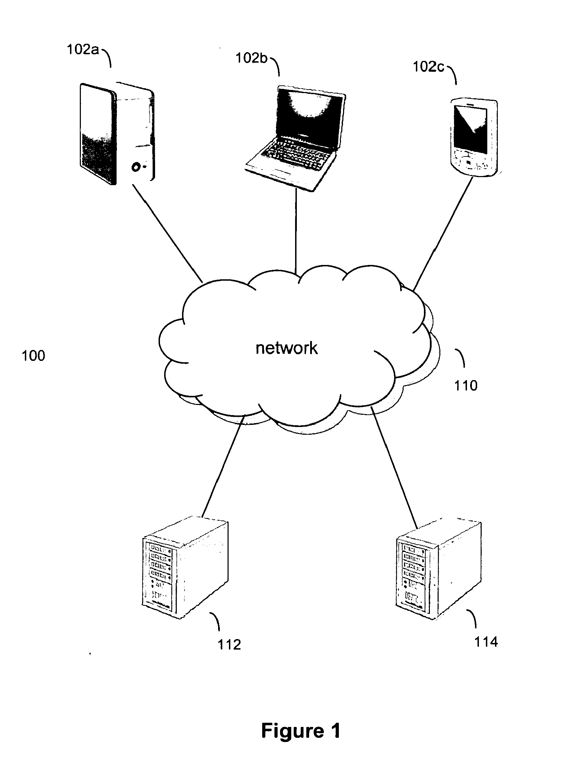

Figure 1 shows a network arrangement 100 comprising a series of devices used for spatialized audio conferencing. The devices include a personal computer 102a, a laptop 102b, and a smartphone 102c. The devices are all connected over a network 110, which may include a local network and/or some external network such as the Internet. Support for configuring and establishing a spatialized audio conference is provided by an application server 112 connected to each of the devices over the network 110. Furthermore, mixing of filtered audio streams is preferably provided by the mixing server 114, which is also connectable to each of the devices over the network 110. The operation of the application server 112 and the mixing server 114 in embodiments of the invention will described below. Whilst the application server 112 and mixing server 114 have been shown as separate entities, in practice, they can be located within the same physical entity or at the least be connected to each other.

Each of the devices 102a, 102b and 102c include a respective audio input such as a microphone and audio output such as headphones. The audio input need only be a mono audio microphone, producing mono audio from the user of the associated device. The audio output is preferably a stereo headphone output, though the invention can be applied to a stereo speaker system of other multichannel audio output arrangement. Each device also includes a spatial processor for filtering the input audio source from the microphone into a spatialized audio stream representing an audio source positioned at a predetermined fixed location in a shared auditory display. Thus, the effect of the filtering is to generate an audio source that when played back through the audio output such as the headphones, will give the impression to a listener that the audio source is emanating from a predetermined fixed location in space. One preferred method of filtering is by application of an HRTF (head related transfer function) to the input audio source.

One advantage of providing a shared fixed auditory display, is that the number of filter operations are reduced when compared to a custom (manipulable) display.

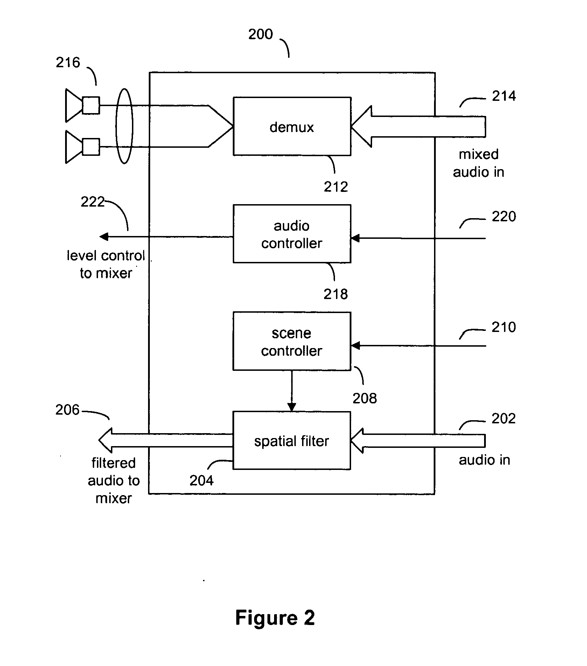

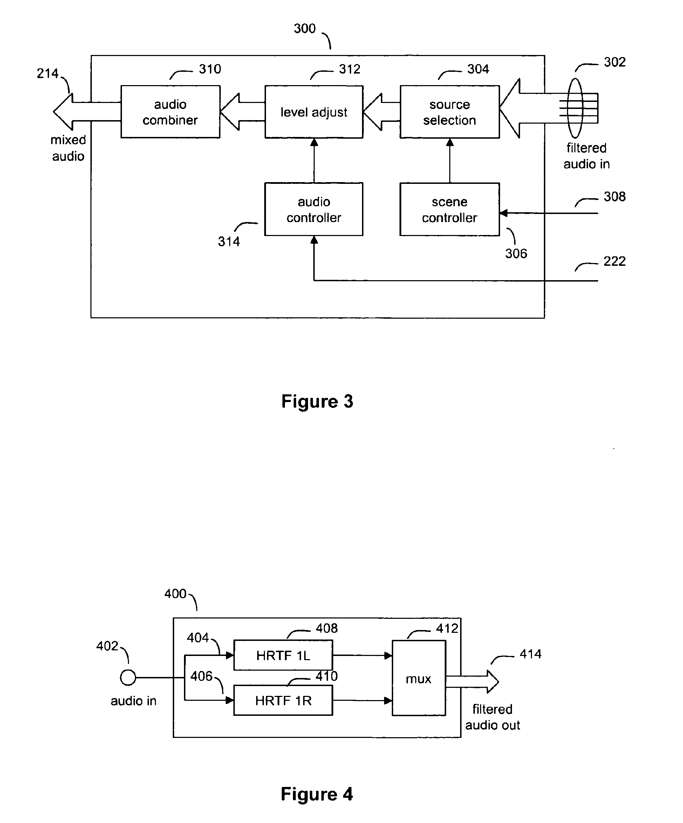

Figure 2 is example of the audio conferencing module 200 found in each of the devices 102a, 102b and 102c. The audio conferencing module 200 comprises an input for an audio source 202, which takes audio input from the user, for example by way of a microphone. The audio source is a monaural audio signal. The audio source 202 is provided to a spatial filter 204, which is configured to locally spatially process the audio 202 into a spatially filtered audio stream 206. In a preferred example, the spatial processor may perform HRTF filtering. A more detailed discussion of HRTF filtering follows below with reference to Figure 4.

The spatial filter 204 is under the control of a scene controller 208, which is responsible for setting the parameters for the filtering process. The scene controller 210 is connected to a further control unit which is responsible for determining the specific spatial location of the audio source within the shared auditory display. In a preferred example, the control unit is located in the application server 112. The spatially filtered audio output 206 is passed onto the mixing module ready for combining with the filtered audio from the other participant devices in the conference. In a preferred example, the mixing module is located centrally for all devices at the mixing server 114.

The audio conferencing module 200 also includes an input for the mixed audio stream 214 provided by the mixer. The mixed stream is generated by mixing together the spatially filtered audio streams output from each of the devices in the audio conference. The mixed audio stream 214 is fed to a demultiplexor 212, which decodes the input audio stream input left and right channels for output to the headphones 216.

The audio conferencing module 200 also includes an optional audio control module 218, which allows the user to adjust the level (volume) of the various audio sources in the shared auditory display. The audio control module 218 includes an input 220 for receiving input signals from the user for adjusting the levels, and also a controller output 222 that is connected to an associated mixing module.

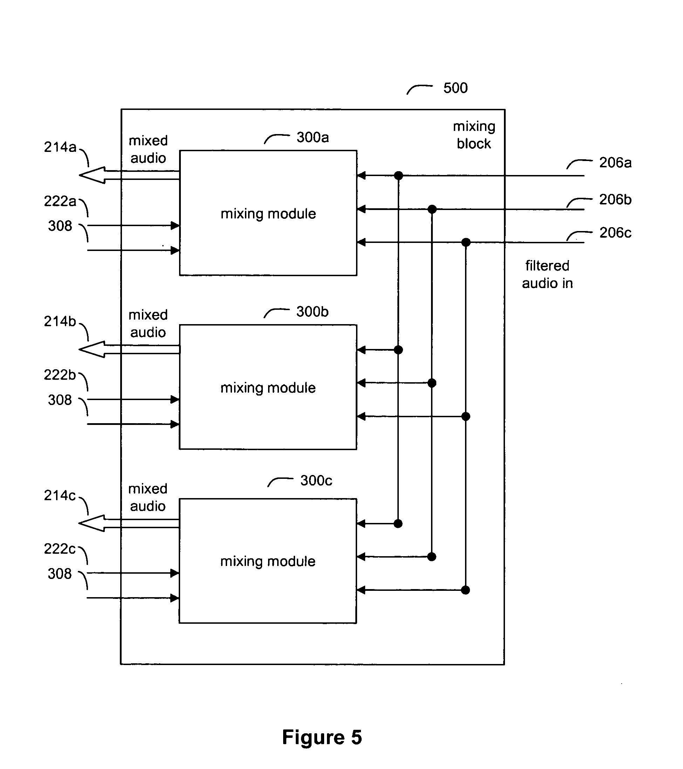

Figure 3 shows a mixing module 300. Each audio conferencing device 102a, 102b and 102c is allocated a separate designated mixing module. Thus, in the present example where there are 3 audio conferencing devices, there will be 3 mixing modules. Figure 5 shows an example of a mixing block 500 comprising 3 separate mixing modules 300a, 300b and 300c. The mixing block 500 will be described in more detail below.

The mixing module 300 comprises an input 302 for the various filtered audio streams from each of the devices. The filtered audio streams are input to a source selection block 304 which is controlled by the scene controller 306, and ensures that the users own voice is not selected for mixing. This process ensures that the final shared auditory display for each device does not include the audio source provided by that device. Thus, a user listening to the display will only hear his own voice directly and not via the display. The filtered audio streams are then passed to a level adjust block 312, which is able to adjust the volume levels associated with each audio stream. The scene controller 306 is connected and controlled via connection 308 by a control/management unit located in the application server 112.

The levels can be set at some predetermined value, for example all audio streams are set to the same comfortable listening level. Alternatively, the levels can be adjusted individually under the control of the audio controller 314, which in turn is controlled by the user of the device associated with the mixing module via the audio controller 218 in the audio conferencing module 200. Thus, the level adjust block 312 and the audio controller 314 allow real time manipulation of the level of each audio source within the auditory display by the user.

Figure 5 shows a mixing block 500 as located in the mixing server 114 in a preferred example of the invention. The mixing block 500 comprises 3 separate mixing modules 300a, 300b and 300c, each of which provides mixing functionality to a corresponding audio conferencing module and associated device. For example, mixing module 300a can provide mixing functionality for the PC 102a, mixing module 300b can provide mixing functionality for the laptop 102b, and mixing module 300c can provide mixing functionality for the smartphone 102c. Each mixing module is comprised of the same elements as illustrated in mixing module 300 in Figure 3, but are simplified here for clarity.

The mixing block 500 includes inputs for the filtered audio streams 206a, 206b and 206c, provided by each of the audio conferencing modules associated with the devices 102a, 102b, and 102c respectively. Each mixing module includes an output 214 for outputting the mixed audio stream, and also inputs 222 and 308 for receiving level and scene control signals from the associated audio conferencing module and application server 112 respectively.

In an alternative example of the invention, each mixing module can also be located at the corresponding device. In this example, the filtered audio output 206 from an audio conferencing module 200 in a given device would be passed onto a mixing module 300 located within the same device for mixing together with filtered audio received from other devices. Alternatively, the mixing modules can be distributed over several different devices, or the entire mixing block can be located at one of the participant devices. However, the filtering of the audio from each device is always performed locally at that device.

In other alternatives, the source selection block 304 in each mixing module 300 may be removed and replaced with a single source selection block within the mixing block 500.

The previously described mixing modules, permit each device to implement level alterations for each audio source within their auditory display. Also, a source selection block is used to ensure that the output from each mixing module does not contain the users own audio source. However, an alternative implementation involves the use of a single mixing module which may be shared by all the participant devices. Using this implementation, the full set of audio sources are mixed, i.e. no source selection is performed. This implementation also does not permit level manipulation (since any alterations would be heard by all users), though the processing resources required for mixing are significantly reduced. However, removal of the users own audio source from the group mixed output must still be performed, which can be done locally at each participant device.

Figure 4 shows a filter module 400, which is an example of the spatial filter block 204 present in the audio conferencing module 200. The filter module 400 comprises an input 402 which takes a monaural audio source and feeds the audio into two head related transfer function filters, HRTF 1 L 408 and HRTF 1 R 410, via inputs 404 and 406 respectively. HRTF 1 L 408 handles the left channel audio output and HRTF 1 R 410 the right channel audio output. The HRTF filters are typically implemented as convolution finite impulse response filters (FIRs). In the time domain the monaural source is convolved with the time domain representation of the HRTF, termed a head related impulse response (HRIR). The filtered output from each of the HRTF filters 408 and 410 are multiplexed together by the multiplexor 412 and output to the relevant mixer module.

The establishing of a conference can be performed by way of the application server 112, which also handles device participation, and controls any necessary adjustment of the scene parameters (i.e. the spatial locations) of the audio sources participating in a conference. The signalling and session management control between the application server and the participant devices can be done using any suitable protocol, such as the session initiation protocol (SIP). When a conference is being established, the application server 112 determines how many participants are to feature in the conference, for example by way of registration by each participant device, and sets the scene based on that number. So for example, each device (or audio source) can be positioned in a geometric arrangement in the scene, with equal angles between each source, and located in the frontal hemisphere with respect to the listener (or headphones). Other options are available. As the application server 112 has control of the filtering performed by each device via input 210 to each devices scene controller 208, there is no need to hold positions open if using a geometric arrangement, since the application server 112 can re-configure the display as users leave or join by adjusting the filtering performed by each spatial filter 204. To illustrate with an example, with 4 users, each source is filtered to be located in the frontal hemisphere with 60 degrees of separation (180/3). If a further user joins, the separation is readjusted to 45 degrees (180/4).

A skilled person will appreciate that the audio conferencing module, the mixing module and the controlling module may be implemented in hardware or software, or combination of the two, within the respective device or network server.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of operating an audio conferencing device for a spatialized audio conferencing system, wherein said method comprises the steps of:
locally filtering a single audio source input to said device to generate a corresponding spatially filtered audio stream;
providing the spatially filtered audio stream to a mixing module corresponding to the device;
receiving a mixed spatially filtered audio stream from the mixing module, said mixed spatially filtered audio stream comprising a plurality of spatially filtered audio streams associated with said audio conferencing device and at least one other audio conferencing device;
outputting the mixed spatially filtered audio stream from the device to an audio output means.

2. A method according to claim 1, where filtering is to predetermined spatial locations in a fixed auditory display.

3. A method according to claim 2, wherein the predetermined spatial locations are determined by a controlling module, and said controlling module is located in a separate server and connected to the audio conferencing device over a network.

4. A method according to claim 2, wherein the predetermined spatial locations are determined by a controlling module, and said controlling module is located in one of a plurality of audio conferencing devices in the audio conferencing system.

5. A method according to any one of claims 1 to 4, wherein the mixing module is located within the audio conferencing device.

6. A method according to any one of claims 1 to 4, wherein the mixing module is located in a separate mixing server connected to the audio conferencing device over a network.

7. A method according to any preceding claim, wherein each audio stream has an associated level and the level is controlled at the mixing module by the audio device.

8. A method according to any preceding claim, wherein the filtering comprises applying a head related transfer function.

9. An audio conferencing device for a spatialized audio conferencing system, said audio conferencing device comprising:
a spatial filter adapted to locally filter a single audio source input to said device to generate a corresponding spatially filtered audio stream, and to provide the spatially filtered audio stream to a mixing module corresponding to the audio conferencing device;
an output module adapted to receive a mixed spatially filtered audio stream from the mixing module, wherein said mixed spatially filtered audio stream comprises a plurality of spatially filtered audio streams associated with said audio conferencing device and at least one other audio conferencing device, and to output the mixed spatially filtered audio stream from the device to an audio output means.

10. A system for spatialized audio conferencing, said system comprising a plurality of audio conferencing devices and a corresponding plurality of mixing modules, wherein:
each of said plurality of devices comprises a filtering module adapted to filter an audio source associated with the respective device to generate a corresponding spatially filtered audio stream, and each of said plurality of devices is adapted to provide the corresponding spatially filtered audio stream to the corresponding mixing module;
each mixing module is adapted to mix each of the plurality of spatially filtered audio streams provided to generate a mixed filtered audio stream, and to provide said mixed filtered audio stream to the audio conferencing device corresponding to the mixing module; and
wherein each of the plurality of devices comprises a processing module for processing the received mixed filtered audio stream into an audio output representing a spatially fixed auditory display.
